# EUROPÄISCHE PATENTSCHRIFT

(11) **EP 1 562 870 B1**
(45) Veröffentlichungstag und Bekanntmachung des Hinweises auf die Patenterteilung: **20.09.2006**
(21) Anmeldenummer: 02808086.9
(22) Anmeldetag: 22.11.2002
(51) Int. Cl.: C03B 33/02

(54) **VORRICHTUNG UND VERFAHREN ZUM BEWEGEN VON GLASTAFELN BEIM BEARBEITEN DERSELBEN**
DEVICE AND METHOD FOR DISPLACING GLASS PLATES DURING THE MACHINING OF THE SAME
DISPOSITIF ET PROCEDE POUR DEPLACER DES PLAQUES DE VERRE LORS DE L'USINAGE DE CES DERNIERES

(43) Veröffentlichungstag der Anmeldung: 17.08.2005
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred
(86) Internationale Anmeldenummer: PCT/IB2002/005781
(87) Internationale Veröffentlichungsnummer: WO 2004/048284

(56) Entgegenhaltungen:
- US-A- 4 199 341

## Beschreibung

Die Erfindung betrifft eine Vorrichtung mit den Merkmalen des einleitenden Teils von Anspruch 1. Eine derartige Vorrichtung ist aus der US-A-4 199 341 bekannt.

Die Erfindung betrifft ferner eine Transportvorrichtung und ein Verfahren zum Transport einer zu bearbeitenden Glastafel.

Beim Bearbeiten von Glastafeln ist es erförderlich oder wenigstens wünschenswert, daß die Glastafeln um genau definierte Strecken und zur richtigen Zeit bewegt werden, um eine präzise Bearbeitung zu erlauben.

Dies gilt insbesondere für das Schneiden von Glastafeln mit Hilfe eines Wasserstrahls, wie dies beispielsweise in der EP 1 110 686 A beschrieben ist. Wenn Glastafeln mit Hilfe eines Wasserstrahls nach Konturen mit beliebigen, also auch gekrümmten Umrißformen, geschnitten werden sollen, ist es besonders wichtig, daß die Glastafel beim Bearbeiten (Schneiden mit Hilfe eines Wasserstrahls) genau definiert bewegt wird, um in Kombination mit Bewegungen der Düse, aus welcher der Wasserstrahl gegen die Glasscheibe gerichtet wird, mit dem Wasserstrahl die vorgegebene Kontur abzufahren. Dabei sind Änderungen der Richtung der Bewegung der Glastafel oft erforderlich.

Das zuvor für das Schneiden von Glastafeln mit einem Wasserstrahl Gesagte gilt auch für das Bearbeiten von Schnitträndern, z.B. solchen, die durch Wasserstrahl-Schneiden erzeugt wurden, durch Schleifen mit (Diamant-)Schleifköpfen, um die Kanten der Schnittränder zu brechen oder zu säumen. Auch bei dieser Bearbeitung kommt es darauf an, die Glastafel relativ zu dem Schleifwerkzeug genau zu bewegen.

Einfache Band- oder Rollenförderer sind nicht in der Lage, diese Bewegungen mit hinreichender Genauigkeit zu bewirken, da sowohl beim Abbremsen als auch beim Beschleunigen unweigerlich zwischen den Förderbändern bzw. den mit elastischen Mänteln versehenen Transportrollen und der Glastafel Schlupf auftritt. Es ist daher in der EP 1 110 686 A vorgeschlagen worden, an der mit Hilfe eines Wasserstrahls zu schneidenden Glastafel eine mit einem Saugkopf ausgestattete Mitnahmevorrichtung angreifen zu lassen, wie dies im Prinzip bereits aus der EP 0 123 009 A bekannt ist.

Allerdings haben sich solche mit Hilfe von Saugköpfen arbeitende Einrichtungen zum Unterstützen der Bewegungen von Glastafeln, als nachteilig erwiesen, da der Saugkopf der Mitnahmevorrichtung für das Bearbeiten der Glastafel oft "im Weg" ist, so daß dort, wo der Saugkopf an der Glastafel angreift, letztere nicht bearbeitet werden kann.

Aus der US 5 086 907 A ist eine Vorrichtung zum Transportieren horizontal liegender, gewölbter Glasscheiben bekannt, die mit einem sogenannten Hubbalkenförderer ausgestattet ist.

Aus der DE 37 18 859 A ist eine Halterung für plattenförmige Gegenstände bekannt, in der die Gegenstände hochkant stehend angeordnet sind. Diese Halterung besitzt Klemmbacken, die durch Federn gegeneinander gespannt sind, um die Gegenstände zwischen sich durch Reibschluß zu fixieren.

Der Erfindung liegt die Aufgabe zu Grunde, eine Vorrichtung und ein Verfahren der eingangs genannten Gattung zur Verfügung zu stellen, mit der Glastafeln, auch wenn sie groß und schwer sind, genau bewegt werden können während sie bearbeitet werden. Insbesondere soll die Vorrichtung auch für das Bewegen von Glastafeln geeignet sein, wenn diese mit Hilfe eines Wasserstrahls geschnitten oder wenn Kanten von Rändern der oder von Ausschnitten in Glastafeln durch einen Schleifkopf geschnitten oder gesäumt werden.

Gelöst wird diese Aufgabe erfindungsgemäß mit einer Vorrichtung und einem Verfahren mit den Merkmalen der unabhängigen Ansprüche.

Bevorzugte und vorteilhafte Ausgestaltungen der erfindungsgemäßen Vorrichtung sind Gegenstand der abhängigen Ansprüche.

Bei der erfindungsgemäßen Vorrichtung wird die Glastafel mit Hilfe einer Hebevorrichtung von der Fördereinrichtung, z.B. den Transportrollen, abgehoben während sie an der Stützwand lehnt und nach dem Herbeiführen einer kraftschlüssigen Verbindung zwischen der Hebeeinrichtung und der Glastafel, letztere durch die Hebeeinrichtung genau und schlupffrei, um die jeweils gewünschte Strecke in die jeweils gewünschte Richtung bewegt.

Die erfindungsgemäße Vorrichtung ist insbesondere dazu bestimmt, Glastafeln in horizontaler Richtung präzise zu bewegen, was mit dem bisher praktizierten Bewegen einer Glastafel mit Hilfe von Transportrollen nicht möglich ist, da bei jedem Bewegungsbeginn und bei jedem Begwegungsende zwischen der Glastafel und dem Fördermittel, z.B. Bandförderern oder Transportrollen, die mit weichem Kunststoff (gummiähnlich) beschichtet sind, Schlupf auftritt.

Insbesondere bei Vorrichtungen zum Schneiden von Glastafeln mit Hilfe eines Wasserstrahls (Wasserstrahl-Schneiden) oder beim Bearbeiten von Glastafeln, um Ränder derselben oder von Ausschnitten in diesen zu schleifen, sind eine Vielzahl von genau auszuführenden Bewegungen der Glastafel in horizontaler Richtung notwendig, damit in Kombination mit lotrechten Bewegungen der Düse, aus welcher der Wasserstrahl austritt, oder eines Schleifkopfes Konturen mit beliebiger Umrißform geschnitten oder abtragend (schleifend) bearbeitet werden können.

In einer bevorzugten Ausführungsform ist die Hebeeinrichtung im wesentlichen rechenförmig ausgebildet, wobei die Glastafel von vom Grundbalken der Hebeeinrichtung abstehenden Hebefingern von der Fördereinrichtung abgehoben wird.

Die kraftschlüssige Verbindung zwischen Hebeeinrichtung und Glastafel kann in einer Ausführungsform dadurch erreicht werden, daß an den Hebefingern Klemmen vorgesehen sind, die an den unteren Rand der Glastafel angelegt werden, um die kraftschlüssige Verbindung zwischen der Hebeeinrichtung und der Glastafel zu bewirken.

Die bevorzugten Vorrichtungen lassen sich zu Transportvorrichtungen kombinieren, die sich aus mehreren Vorrichtungen zusammensetzen. Dabei sind die Vorrichtungen so hintereinander angeordnet, dass eine zu bearbeitende Glastafel je nach Bedarf von einer Vorrichtung auf die benachbarte Vorrichtung umgesetzt werden kann. Auf diese Weise kann auch der untere horizontale Rand der Glastafel bearbeitet werden. Insbesondere kann der untere horizontale Rand der Glastafel abgeschliffen oder mit Aussparungen versehen werden. Die Bearbeitung des unteren horizontalen Rands erfolgt dabei in einem von der Hebeeinrichtung nicht belegten Abschnitt des unteren horizontalen Rands.

Die Umsetzung von einer Vorrichtung auf die benachbarte Vorrichtung erfolgt dabei derart, dass die zu bearbeitende Glastafel während des Bearbeitungsvorganges stets in wenigstens einer der Hebeeinrichtungen festgelegt ist. Auf diese Weise ist die Position der Glastafel bezüglich des Bearbeitungswerkzeuges während des Bearbeitungsvorgangs definiert, da die Glastafel schlupf- und spielfrei von einer Vorrichtung zum Bearbeiten von Glastafeln auf die benachbarte Vorrichtung umgesetzt wird.

Weitere Einzelheiten, Merkmale und Vorteile der Erfindung ergeben sich aus der nachstehenden Beschreibung eines in den Zeichnungen schematisch wiedergegebenen Ausführungsbeispieles für eine Vorrichtung gemäß der Erfindung.

Es zeigt:
- Fig. 1: einen Teil einer erfindungsgemäßen Vorrichtung in Schrägansicht,
- Fig. 2: eine Vorderansicht hierzu,
- Fig. 3: eine Ansicht der Vorrichtung mit einer von Transportrollen abgehobenen Glastafel,
- Fig. 4: eine Seitenansicht hierzu,
- Fig. 5: eine Vorderansicht auf eine Transportvorrichtung, die sich aus zwei der in Figur 1 bis Figur 4 dargestellten Vorrichtungen zusammensetzt, und
- Fig. 6: eine Vorderansicht auf die zweite Vorrichtung aus Fig. 5.

Die erfindungsgemäße Vorrichtung besitzt eine Stützwand 1, die wie in der Glasbranche üblich, oben etwas nach hinten geneigt ist. In der Stützwand 1 sind mehrere, über die Fläche der Stützwand 1 gleichmäßig verteilte Stützrollen 2 vorgesehen, die um im wesentlichen lotrechte Achsen frei drehbar sind, und die mit einem elastischen Laufring ausgestattet sind.

Grundsätzlich ist jede andere Art der Abstützung der Glastafel 5 der Stützwand 1 möglich, beispielsweise Stützwalzen, Luftkissen oder ähnliches.

Am unteren Rand der Stützwand 1 ist eine Fördereinrichtung in Form einer Reihe von Transportrollen 3 vorgesehen, die um zur Ebene der Stützwand 1 senkrechte Achsen drehangetrieben sind. Obwohl im Ausführungsbeispiel die Fördereinrichtung aus Transportrollen 3 besteht, ist in Betracht gezogen, daß die im Ausführungsbeispiel aus Transportrollen 3 bestehende Fördereinrichtung am unteren Ende der Stützwand 1 auch von einer Reihe von Förderbändern oder von einem in bestimmten Abständen unter das obere Trum nach unten umgelenkten Förderband gebildet sein kann.

Eine Glastafel 5 wird auf den Transportrollen 3 stehend und gegen die Stützwand 1 über die Stützrollen 2 abgestützt lehnend transportiert (Richtungspfeil 6). Der Transport einer Glasscheibe 5 mit Hilfe der Transportrollen 3 dient vornehmlich zum Heranfördern einer zu bearbeitenden Glastafel 5 und zum Abtransport derselben nach ihrer Bearbeitung.

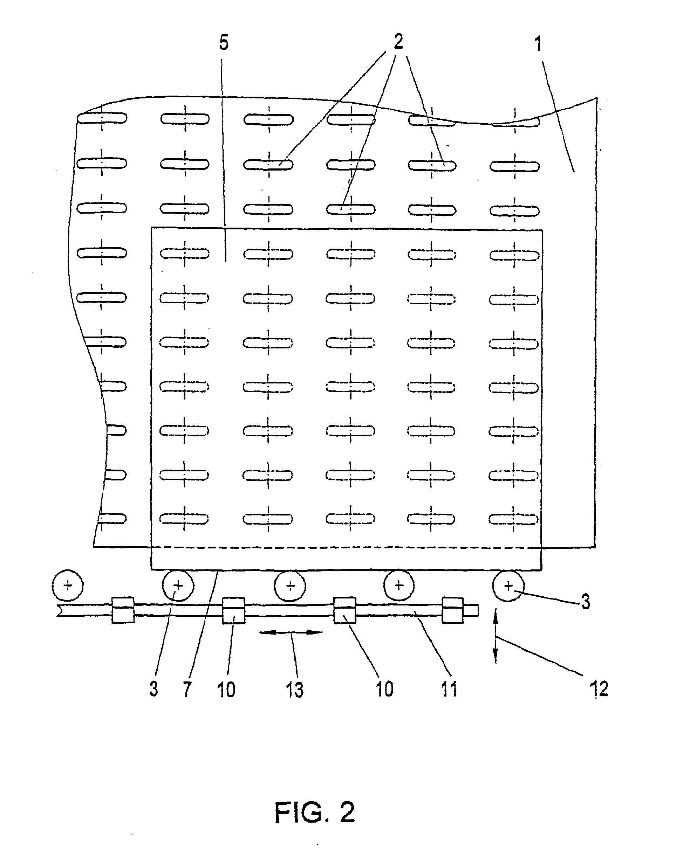

Die Situation mit auf den Transportrollen 3 aufstehender und an den Stützrollen 2 lehnender Glastafel 5 ist nochmal in Fig. 2 gezeigt (Vorderansicht).

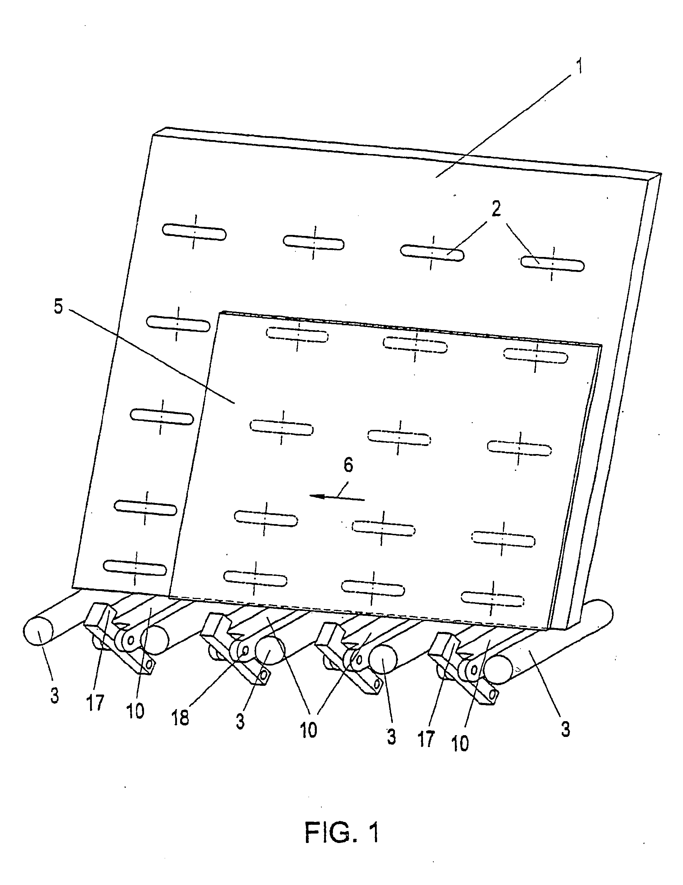

Fig. 2 zeigt so wie Fig. 1, daß zwischen jeder Transportrolle 3 ein Hebefinger 10 angeordnet ist, der zunächst mit Abstand unterhalb des unteren horizontalen Randes 7 einer auf den Transportrollen 3 stehenden Glastafel 5 angeordnet ist. Die Hebefinger 10 sind an einem gemeinsamen Balken 11, der zusammen mit diesen eine "Hebeeinrichtung" bildet, angeordnet, der sowohl im wesentlichen lotrecht (parallel zur Ebene der Stützwand 1; Pfeil 12) als auch horizontal (Pfeil 13) bewegt werden kann.

Wenn als Fördereinrichtung eine Reihe von Förderbändern vorgesehen ist, sind Hebefinger 10 der Hebeeinrichtung jeweils zwischen benachbarten Förderbändern angeordnet. Bei einem bereichsweise nach unten umgelenkten Förderband sind Hebefinger 10 dort angeordnet, wo das Förderband nach unten umgelenkt ist.

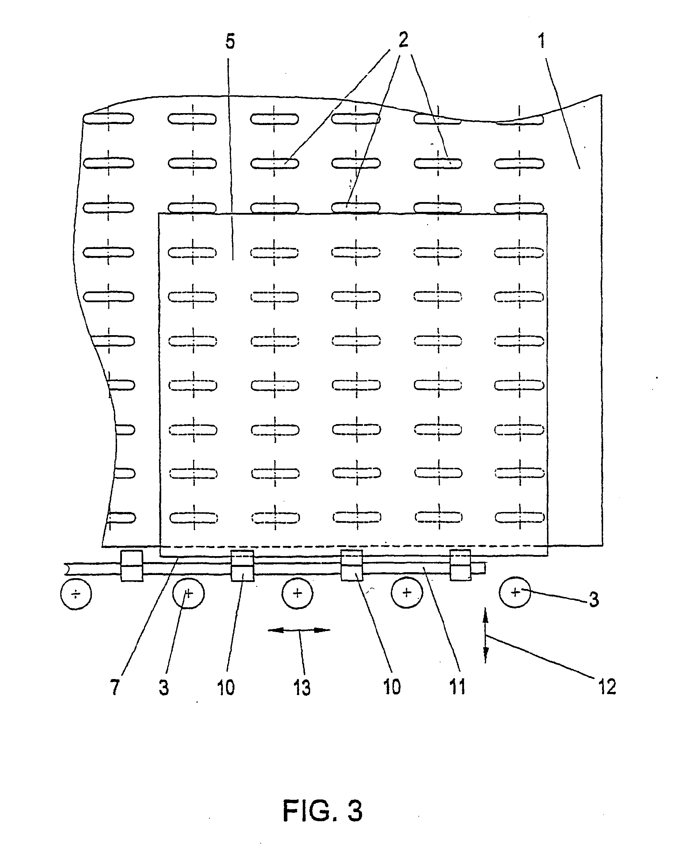

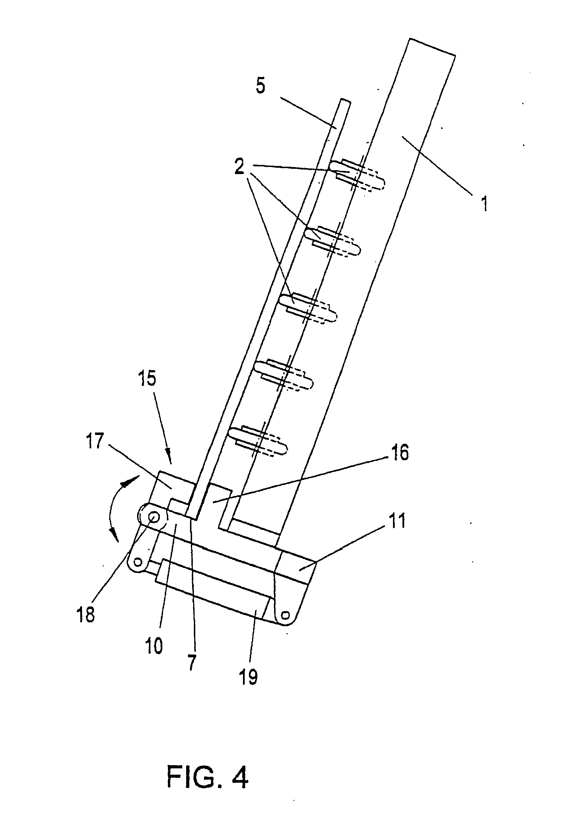

Zunächst wird der Balken 11 mit den Hebefingern 10 (die Hebeeinrichtung aus Balken 11 und Hebefingern 10 ist im wesentlichen rechenartig ausgebildet) in Richtung des Pfeiles 12 angehoben, bis die Hebefinger 10 mit ihren nach oben weisenden Flächen von unten her am unteren Rand 7 der Glastafel 5 auflaufen und diese beim weiteren Anheben von den Transportrollen 3 abheben. Die Situation mit abgehobener Glastafel 5 ist in Fig. 3 und 4 gezeigt.

Um die Glastafel 5 mit den Hebefingern 10 der Hebevorrichtung (kraftschlüssig) zu verbinden, ist an einzelnen oder an jedem Hebefinger 10 eine Klemme 15 vorgesehen (siehe Fig. 4). Diese Klemmen 15 klemmen den unteren Rand der Glastafel 5, so daß diese ohne Schlupf den horizontalen Bewegungen (Pfeil 13) der Hebeeinrichtung (Balken 11 und Hebefinger 10) folgt, wenn die Glastafel 5 bearbeitet wird und hiezu (horizontal, hin und her) bewegt werden soll.

Im einzelnen kann die Klemme 15 an jedem Hebefinger 10 aus einer mit dem Hebefinger 10 fix verbundenen Backe 16 und einer am freien Ende der Hebefinger 10 verschwenkbar (Achse 18) gelagerten Klemmbacke 17 bestehen. Die Backen 16 und 17 können an ihren in der Klemmstellung an der Glastafel 5 anliegenden Bereichen mit Auflagen aus elastischem Werkstoff versehen sein.

Zum Betätigen der um die Achsen 18 verschwenkbaren Klemmbacken 17 ist jeder Klemme 15 ein Druckmittelzylinder 19 zugeordnet, der im Bereich des Balkens 11 abgestützt ist und der an einer über die Schwenkachse 18 hinaus ragenden Verlängerung der Klemmbacke 17 angreift.

Zum Bewegen der Hebeeinrichtung bestehend aus den Hebefingern 10 und dem Balken 11 können beliebige Linearantriebe vorgesehen sein. Bevorzugt sind Zahnstangen-Ritzel-Antriebe oder Spindel-Antriebe.

Falls der Hub in Richtung des Pfeiles 13 beim Bearbeiten (z.B. beim Wasserstrahl-Schneiden) einer Glastafel 5 größer sein muß als der maximale Hub der Hebeeinrichtung kann die Hebeeinrichtung abgesenkt, die Glastafel 5 auf den Transportrollen 3 abgestellt und die Hebeeinrichtung nach dem Rückbewegen der Hebeeinrichtung in ihre Ausgangsposition ("Ausholbewegung") wieder angehoben werden, so daß wieder die Situation der Fig. 3 und 4 erreicht ist und ein neuerliches Bewegen der Glastafel 5 in die gewünschte Richtung möglich ist.

Zusammenfassend kann ein bevorzugtes Ausführungsbeispiel der Vorrichtung wie folgt dargestellt werden:

Bei einer Vorrichtung zum Bearbeiten einer Glastafel 5 ist eine Hebeeinrichtung 10,11 vorgesehen, mit der die Glastafel 5 während des Bearbeitens von einer am unteren Rand einer Stützwand 1 vorgesehenen Fördereinrichtung 3 abgehoben werden kann. Die Hebeeinrichtung 10,11 weist Hebefinger 10 auf, an denen Klemmen 15 vorgesehen sind, die am unteren horizontalen Rand 7 der Glastafel 5 angelegt werden können, um die Glastafel 5 mit der Hebeeinrichtung 10,11 kraftschlüssig zu verbinden. Der Hebeeinrichtung 10,11 ist nicht nur ein Antrieb zum Heben und Senken derselben, sondern auch ein Antrieb zum horizontalen Bewegen derselben zugeordnet, so daß die Glastafel 5 beim Bearbeiten schlupffrei und ohne Zeitverzögerung bewegt werden kann.

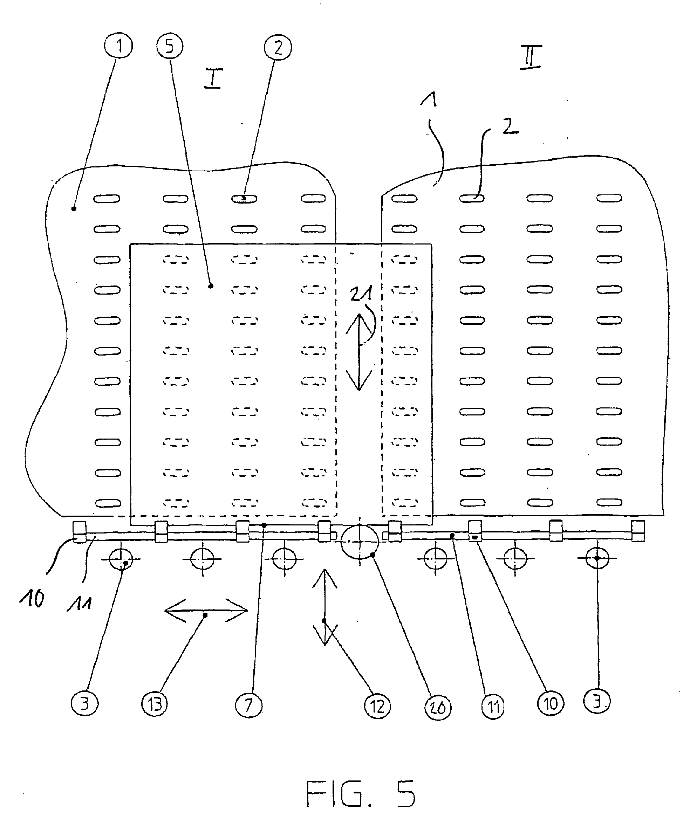

Die anhand der Figuren 1 bis 4 beschriebene Vorrichtung kann zu einer Transportvorrichtung kombiniert werden, die in Fig. 5 dargestellt ist. Diese Transportvorrichtung weist jeweils in den Sektionen I und II eine der anhand Fig. 1 bis 4 dargestellten Vorrichtungen auf. Dabei bezeichnen gleiche Bezugszeichen in den Sektionen I und II einander entsprechende Teile. Ebenso wie die Vorrichtung in Sektion I weist die Vorrichtung in Sektion II eine Stützwand 1 auf, die mit Stützrollen 2 versehen ist. Außerdem umfasst die Vorrichtung in Sektion II eine Hebeeinrichtung 10, 11 mit Hebefingern 10, die an einem Balken 11 angebracht sind.

Fig. 5 zeigt eine Vorderansicht der die Sektion I und II aufweisenden Transportvorrichtung zu einem Zeitpunkt, in dem die Glastafel 5 von der Sektion I in die Sektion II umgesetzt wird. Der Umsetzvorgang läuft wie folgt ab:

Zunächst läuft die Glastafel 5 auf den Transportrollen 3 in Sektion I ein. Anschließend wird die Hebeeinrichtung 10, 11 in Sektion I angehoben und die Glastafel 5 mit Hilfe der Hebefinger 10 kraftschlüssig gehalten. Die Transportrollen 3 werden daraufhin abgesenkt, so dass die Glastafel 5 in Sektion I von der Hebeeinrichtung 10, 11 geführt wird.

Ein freistehender Abschnitt des unteren horizontalen Rands 7 der Glastafel 5 kann nunmehr mit Hilfe eines Bearbeitungswerkzeugs 20, z.B. einer Diamantschleifscheibe oder mit Hilfe eines Wasserstrahlwerkzeugs, bearbeitet werden. Das Bearbeitungswerkzeug 20 kann zwischen den Sektionen I und II in Richtung eines Pfeils 21 bewegt werden. Zur Bearbeitung der unteren horizontalen Rands 7 der Glastafel 5 befindet sich das Bearbeitungswerkzeug 20 jedoch in der in Fig. 5 dargestellten Stellung.

Während der untere horizontale Rand 7 der Glastafel 5 vom Bearbeitungswerkzeug 20 bearbeitet wird, fährt die Hebeeinrichtung 10, 11 so weit wie möglich an das Bearbeitungswerkzeug 20 heran. Der freistehende Abschnitt des horizontalen Rands 7 ragt dann in Sektion II der Transportvorrichtung hinein. Um die Glastafel 5 abzustützten, sind zu diesem Zeitpunkt die Transportrollen 3 in Sektion II angehoben, um zu verhindern, dass sich die Glastafel 5 aus der Hebeeinrichtung 10, 11 in Sektion I löst. Nachdem der freistehende Abschnitt des horizontalen Rands bearbeitet worden ist, wird die Hebeeinrichtung 10, 11 in Sektion II angehoben und die Glastafel 5 mit Hilfe der Hebeeinrichtung 10, 11 in Sektion II festgelegt. Die Transportrollen 3 in Sektion II werden daraufhin abgesenkt und die Transportrollen in Sektion I angehoben. Die Hebeeinrichtung 10, 11 in Sektion I kann nunmehr gelöst und abgesenkt werden, so dass es möglich ist, die auf den Transportrollen 3 in Sektion 1 lagernde Glastafel 5 in Sektion II zu ziehen. Infolgedessen ist es möglich, nunmehr auch den restlichen Abschnitt des horizontalen Rands 7 mit Hilfe des Bearbeitungswerkzeugs 20 zu bearbeiten.

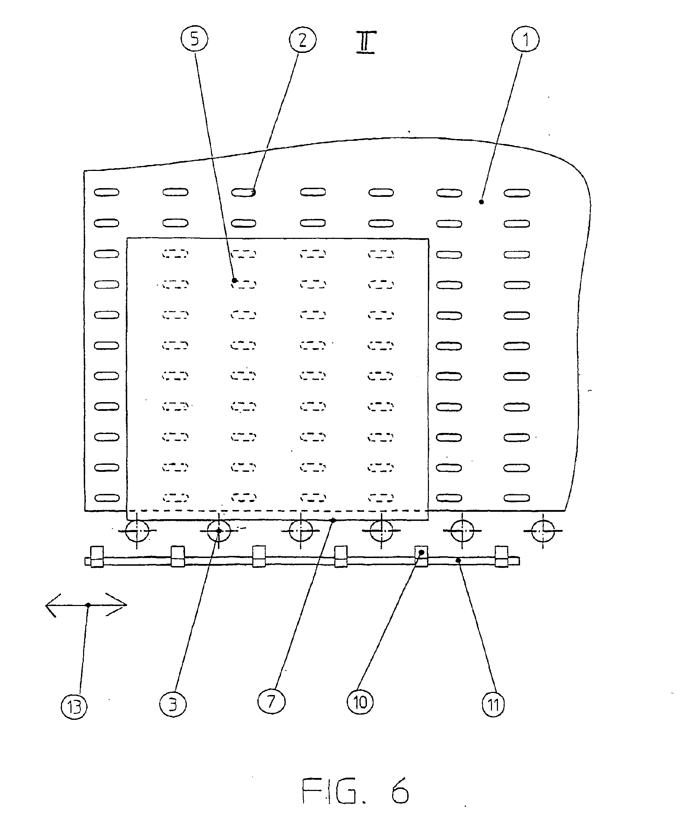

Dabei titt unter Umständen das Problem auf, dass der Stellweg der Hebeeinrichtung 10, 11 in Sektion II nicht ausreicht, um den gesamten restlichen unteren horizontalen Rand 7 der Glastafel 5 zu bearbeiten. Die Hebeeinrichtungen 10, 11 in den Sektionen I und II sind jedoch auch in der Lage umzugreifen. Dies sei anhand Fig. 6 beispielhaft erläutert.

Das Umgreifen der Hebeeinrichtung 10, 11 an der Glastafel 5 wird durchgeführt, indem beispielsweise in Sektion II die Transportrollen 3 angehoben werden und indem die Glastafel 5 auf den Transportrollen 3 abgestellt wird. In einem weiteren Verfahrensschritt wird die Hebeeinrichtung 10, 11 abgesetzt und auf geeignete Weise in Richtung des Pfeils 13 verfahren. Anschließend wird die Hebeeinrichtung 10, 11 in Sektion II erneut angehoben und die Glastafel 5 in der Hebeeinrichtung 10, 11 festgelegt. Nach dem Absenken der Transportrollen 3 in Sektion II kann dann die Glastafel 5 erneut von der Hebeeinrichtung 10, 11 geführt der Stützwand 1 entlang bewegt werden.

Ebenso wie der in Fig. 5 dargestellte Umsetzvorgang erfolgt der in Fig. 6 dargestellte Umgreifvorgang schlupf- und spielfrei, da die Glastafel 5, während die Hebeeinrichtung 10, 11 von der Glastafel 5 gelöst ist, auf den Transportrollen 3 ruht. Die Hebeeinrichtung kann daher die Glastafel 5 in der gleichen Position aufnehmen, in der die Hebeeinrichtung 10, 11 diese abgesetzt hat.

Es sei angemerkt, dass mit Hilfe der in den Figuren 5 und 6 dargestellten Transportvorrichtung Glastafeln bis zu einer Länge von etwa 10 Metern allseitig und in der Fläche bearbeitet werden können. Das Bearbeiten der Glastafeln 5 an den Rändern erfolgt dabei mit Hilfe von Schleifwerkzeugen oder mit Hilfe von Wasserstrahl. Die Bearbeitung der Glastafel 5 in der Fläche erfolgt vorzugsweise mit Hilfe von Wasserstrahl.

## Patentansprüche

1. Vorrichtung zum Bearbeiten von Glastafeln (5) mit einer Stützwand (1) und einer am unteren Rand der Stützwand vorgesehenen Fördereinrichtung (3), auf der eine Glastafel (5) mit ihrem unteren, horizontalen Rand aufsteht, während sie an der Stützwand (1) lehnt, wobei dem unteren Rand der Stützwand (1) eine Hebeeinrichtung (10, 11) zugeordnet ist, die aus einer unterhalb der Fördereinrichtung (3) befindlichen Bereitschaftsstellung in eine gegenüber der Fördereinrichtung (3) angehobene Wirkstellung anhebbar ist, **dadurch gekennzeichnet, daß** die Hebeeinrichtung (10, 11) an der Glastafel (5) festlegbar ist und daß der Hebeeinrichtung (10, 11) ein Antrieb zum Bewegen der Hebeeinrichtung (10, 11) in wenigstens einer Richtung (Pfeil 13) in der Ebene der Stützwand (1) zugeordnet ist.

2. Vorrichtung nach Anspruch 1, **dadurch gekennzeichnet, daß** die Hebeeinrichtung im wesentlichen rechenartig mit einem Grundbalken (11) und mehreren, von diesem abstehenden Hebefingern (10) ausgebildet ist.

3. Vorrichtung nach Anspruch 1 oder 2, **dadurch gekennzeichnet, daß** wenigstens je ein Hebefinger (10) der Hebeeinrichtung (10, 11) zwischen benachbarten Abschnitten der Fördereinrichtung (3) angeordnet ist.

4. Vorrichtung nach einem der Ansprüche 1 bis 3, **dadurch gekennzeichnet, daß** die Fördereinrichtung aus einer Reihe von wenigstens zum Teil drehangetriebenen Transportrollen (3) gebildet ist.

5. Vorrichtung nach Anspruch 4, **dadurch gekennzeichnet, daß** Hebefinger (10) der Hebeeinrichtung zwischen Transportrollen (3) angeordnet sind.

6. Vorrichtung nach einem der Ansprüche 1 bis 3, **dadurch gekennzeichnet, daß** die Fördereinrichtung aus einer Reihe von Abschnitten von Förderbändern gebildet ist.

7. Vorrichtung nach Anspruch 6, **dadurch gekennzeichnet, daß** die Abschnitte der Fördereinrichtung eine Folge von Förderbändern ist, die mit Abstand voneinander angeordnet sind, wobei Hebefinger (10) zwischen Abschnitten der Förderbänder angeordnet sind.

8. Vorrichtung nach Anspruch 6, **dadurch gekennzeichnet, daß** die Abschnitte der Fördereinrichtung von einem Endlosförderband gebildet sind, das im Bereich von Hebefingern (10) der Hebeeinrichtung nach unten umgelenkt ist.

9. Vorrichtung nach einem der Ansprüche 1 bis 8, **dadurch gekennzeichnet, daß** an Hebefingern (10) Klemmen (15) für das Festlegen einer Glastafel (5) an der Hebeeinrichtung (10,11) vorgesehen sind.

10. Vorrichtung nach Anspruch 9, **dadurch gekennzeichnet, daß** die Klemmen (15) an Hebefingern (10) zwei Klemmbacken (16,17) aufweisen.

11. Vorrichtung nach Anspruch 10, **dadurch gekennzeichnet, daß** wenigstens eine (16) der Klemmbacken (16, 17) mit dem Hebefinger (10) starr verbunden ist.

12. Vorrichtung nach Anspruch 10 oder 11, **dadurch gekennzeichnet, daß** wenigstens eine (17) der Klemmbacken (17,16) gegenüber dem Hebefinger (10) verschwenkbar ist.

13. Vorrichtung nach einem der Ansprüche 9 bis 12, **dadurch gekennzeichnet, daß** die Klemmen (15) der Hebefinger (10) an den unteren horizontalen Rand einer Glastafel (5) anlegbar sind.

14. Vorrichtung nach einem der Ansprüche 9 bis 13, **dadurch gekennzeichnet, daß** die an die Glastafel (5) anlegbaren Flächen der Klemmbacken (16,17) der Klemmen (15) mit einer Auflage aus elastischem Werkstoff versehen sind.

15. Vorrichtung nach einem der Ansprüche 12 bis 14, **dadurch gekennzeichnet, daß** die bewegliche Klemmbacke (17) der Klemme (15) an dem vom Grundbalken (11) der Hebeeinrichtung (10,11) entfernt liegenden Ende der Hebefinger (10) um eine Achse (18) verschwenkbar gelagert ist.

16. Vorrichtung nach einem der Ansprüche 1 bis 15, **dadurch gekennzeichnet, daß** der Antrieb zum Bewegen der Hebeeinrichtung mit dem Grundbalken (11) der Hebeeinrichtung (10,11) gekuppelt ist.

17. Vorrichtung nach einem der Ansprüche 1 bis 16, **dadurch gekennzeichnet, daß** gesonderte Antriebe zum Anheben und Absenken der Hebeeinrichtung (10,11) einerseits und zum horizontalen Bewegen der Hebeeinrichtung (10,11) anderseits vorgesehen sind.

18. Transportvorrichtung, **gekennzeichnet, durch** wenigstens zwei hintereinander angeordnete Vorrichtungen nach einem der Ansprüche 1 bis 17.

19. Transportvorrichtung nach Anspruch 18, **dadurch gekennzeichnet, dass** während eines Bearbeitungsvorgangs an der Glastafel (5) wenigstens eine Hebeeinrichtung (10, 11) an der zu bearbeitenden Glastafel (5) festlegbar ist.

20. Verfahren zum Transport einer zu bearbeitenden Glastafel (5), **gekennzeichnet durch** folgende Verfahrensschritte:
- Anlegen der Glastafel (5) an eine Stützwand (1) einer ersten Vorrichtung nach einem der Ansprüche 1 bis 17;
- Festlegen der Glasplatte (5) in der Hebeeinrichtung (10, 11) der ersten Vorrichtung;
- Transport der Glastafel (5) zu einer zweiten Vorrichtung nach einem der Ansprüche 1 bis 17;
- Festlegen der Glasplatte (5) in der Hebeeinrichung (10, 11) der zweiten Vorrichtung; und
- Lösen der Hebevorrichtung (10, 11) der ersten Vorrichtung.

## Claims

1. Device for working on glass sheets (5) with a support wall (1) and a conveyor means (3) which is provided on the lower edge of the support wall and on which a glass sheet (5) stands upright with its lower horizontal edge while it is leaning on the support wall (1), a lifting means (10, 11) is assigned to the lower edge of the support wall (1), which lifting means (10, 11) can be raised out of a readiness position which is underneath the conveyor means (3) into an action position which is raised relative to the conveyor means (3), **characterized in that** the lifting means (10, 11) can be fixed on the glass sheet (5) and that a drive for moving the lifting means (10, 11) in at least one direction (arrow 13) in the plane of the support wall (1) is assigned to the lifting means (10, 11).

2. Device as claimed in claim 1, **characterized in that** the lifting means is made essentially rake-like with a base beam (11) and several lifting fingers (10) projecting from it.

3. Device as claimed in claim 1 or 2, **characterized in that** at least one lifting finger (10) of the lifting means (10, 11) is located between adjacent sections of the conveyor means (3) respectively.

4. Device as claimed in one of claims 1 to 3, **characterized in that** the conveyor means is formed from a row of conveyor rollers (3) which are at least partially driven in rotation.

5. Device as claimed in claim 4, **characterized in that** lifting fingers (10) of the lifting means are located between the conveyor rollers (3).

6. Device as claimed in one of claims 1 to 3, **characterized in that** the conveyor means is formed from a row of sections of conveyor belts.

7. Device as claimed in claim 6, **characterized in that** the sections of the conveyor means are a sequence of conveyor belts which are located at a distance from one another, the lifting fingers (10) being located between the sections of the conveyor belts.

8. Device as claimed in claim 6, **characterized in that** the sections of the conveyor means are formed by a continuous conveyor belt which is deflected downwards in the area of the lifting fingers (10) of the lifting means.

9. Device as claimed in one of claims 1 to 8, **characterized in that** clamps (15) for fixing a glass sheet (5) on the lifting means (10, 11) are provided on lifting fingers (10).

10. Device as claimed in claim 9, **characterized in that** the clamps (15) have two clamp jaws (16, 17) on lifting fingers (10).

11. Device as claimed in claim 10, **characterized in that** at least one (16) of the clamp jaws (16, 17) is rigidly connected to the lifting finger (10) .

12. Device as claimed in claim 10 or 11, **characterized in that** at least one (17) of the clamp jaws (17, 16) can be swivelled relative to the lifting finger (10).

13. Device as claimed in one of claims 9 to 12, **characterized in that** the clamps (15) of the lifting fingers (10) can be placed against the lower horizontal edge of a glass sheet (5).

14. Device as claimed in one of claims 9 to 13, **characterized in that** the surfaces of the clamp jaws (16, 17) of the clamps (15), which surfaces can be placed against the glass sheet (5) are provided with a support of elastic material.

15. Device as claimed in one of claims 12 to 14, **characterized in that** the movable clamp jaw (17) of the clamp (15) is supported to be able to swivel around an axis (18) on the end of the lifting finger (10) which is remote from the base beam (11) of the lifting means (10, 11).

16. Device as claimed in one of claims 1 to 15, **characterized in that** the drive for moving the lifting means is coupled to the base beam (11) of the lifting means (10, 11).

17. Device as claimed in one of claims 1 to 16, **characterized in that** there are separate drives for raising and lowering the lifting means (10, 11) on the one hand and for horizontal movement of the lifting means (10, 11) on the other.

18. Transport device **characterized by** at least two successive devices as claimed in one of claims 1 to 17.

19. Transport device as claimed in claim 18, **characterized in that** during a working process on the glass sheet (5) at least one lifting means (10, 11) can be fixed on the glass sheet (5) which is to be worked on.

20. Process for transport of a glass sheet (5) which is to be worked on, **characterized by** the following process steps:
- placing the glass sheet (5) against a support wall (1) of a first device as claimed in one of claims 1 to 17;
- fixing the glass plate (5) in the lifting means (10, 11) of the first device;
- transport of the glass sheet (5) to a second device as claimed in one of claims 1 to 17;
- fixing the glass plate (5) in the lifting means (10, 11) of the second device; and
- releasing the lifting device (10, 11) of the first device.

## Revendications

1. Dispositif d'usinage de plaques de verre (5), comprenant une paroi d'appui (1) et un moyen de transport (3) qui est prévu au niveau du bord inférieur de la paroi d'appui et sur lequel repose une plaque de verre (5) avec son bord horizontal inférieur, pendant qu'elle est en appui contre la paroi d'appui (1), un moyen de levage (10, 11) étant associé au bord inférieur de la paroi d'appui (1), lequel moyen peut être amené d'une position d'attente, située en dessous du moyen de transport (3), dans une position active, relevée par rapport au moyen de transport (3), **caractérisé en ce que** le moyen de levage (10, 11) peut être fixé à la plaque de verre (5) et qu'un mécanisme d'entraînement, destiné à déplacer le moyen de levage (10, 11) dans au moins une direction (flèche 13), dans le plan de la paroi d'appui (1), est associé au moyen de levage (10, 11).

2. Dispositif selon la revendication 1, **caractérisé en ce que** le moyen de levage est réalisé essentiellement sous la forme d'un râteau, avec une traverse (11) et plusieurs bras de levage (10) faisant saillie à partir de celle-ci.

3. Dispositif selon la revendication 1 ou 2, **caractérisé en ce qu'**au moins un bras de levage (10) du moyen de levage (10, 11) est disposé respectivement entre des segments voisins du moyen de transport (3).

4. Dispositif selon une des revendications 1 à 3, **caractérisé en ce que** le moyen de transport est constitué d'une série de rouleaux transporteurs (3), dont une partie au moins est entraînée en rotation.

5. Dispositif selon la revendication 4, **caractérisé en ce que** des bras de levage (10) du moyen de levage sont disposés entre des rouleaux transporteurs (3).

6. Dispositif selon une des revendications 1 à 3, **caractérisé en ce que** le moyen de transport est constitué d'une série de segments de bandes transporteuses.

7. Dispositif selon la revendication 6, **caractérisé en ce que** les segments du moyen de transport sont formés d'une succession de bandes transporteuses qui sont disposées à distance les unes des autres, des bras de levage (10) étant placés entre des segments de bandes transporteuses.

8. Dispositif selon la revendication 6, **caractérisé en ce que** les segments du moyen de transport sont constitués d'une bande transporteuse sans fin qui est déviée vers le bas dans la région de bras de levage (10) du moyen de levage.

9. Dispositif selon une des revendications 1 à 8, **caractérisé en ce que** des éléments de serrage (15) pour l'immobilisation d'une plaque de verre (5) sur le moyen de levage (10, 11) sont prévus sur des bras de levage (10).

10. Dispositif selon la revendication 9, **caractérisé en ce que** les éléments de serrage (15) prévus sur les bras de levage (10) présentent deux mâchoires de serrage (16, 17).

11. Dispositif selon la revendication 10, **caractérisé en ce qu'**au moins l'une (16) des mâchoires de serrage (16, 17) est liée rigidement au bras de levage (10).

12. Dispositif selon la revendication 10 ou 11, **caractérisé en ce qu'**au moins l'une (17) des mâchoires de serrage (17, 16) peut être pivotée par rapport au bras de levage (10).

13. Dispositif selon une des revendications 9 à 12, **caractérisé en ce que** les éléments de serrage (15) des bras de levage (10) peuvent être appliqués contre le bord horizontal inférieur d'une plaque de verre (5).

14. Dispositif selon une des revendications 9 à 13, **caractérisé en ce que** les surfaces des mâchoires de serrage (16, 17) des éléments de serrage (15) qui peuvent être appliquées contre la plaque de verre (5) sont pourvues d'une garniture en un matériau élastique.

15. Dispositif selon une des revendications 12 à 14, **caractérisé en ce que** la mâchoire mobile (17) de l'élément de serrage (15) est montée, avec possibilité de pivotement autour d'un axe (18), sur l'extrémité des bras de levage (10) qui est éloignée de la traverse (11) du moyen de levage (10, 11).

16. Dispositif selon une des revendications 1 à 15, **caractérisé en ce que** le mécanisme d'entraînement, destiné à déplacer le moyen de levage, est couplé à la traverse (11) du moyen de levage (10, 11).

17. Dispositif selon une des revendications 1 à 16, **caractérisé en ce qu'**il est prévu des mécanismes d'entraînement distincts pour lever et baisser le moyen de levage (10, 11), d'une part, et pour effectuer le déplacement horizontal du moyen de levage (10, 11), d'autre part.

18. Dispositif de transport, **caractérisé en ce que** qu'il comprend au moins deux dispositifs selon une des revendications 1 à 17, installés l'un à la suite de l'autre.

19. Dispositif de transport selon la revendication 18, **caractérisé en ce que** pendant une opération d'usinage de la plaque de verre (5), au moins un moyen de levage (10, 11) peut être fixé à la plaque de verre (5) à usiner.

20. Procédé de transport d'une plaque de verre (5) à usiner, **caractérisé en ce qu'**il comprend les étapes suivantes:
- pose de la plaque de verre (5) contre une paroi d'appui (1) d'un premier dispositif selon une des revendications 1 à 17;
- immobilisation de la plaque de verre (5) dans le moyen de levage (10, 11) du premier dispositif;
- transport de la plaque de verre (5) vers un deuxième dispositif selon une des revendications 1 à 17;
- immobilisation de la plaque de verre (5) dans le moyen de levage (10, 11) du deuxième dispositif, et
- dégagement du moyen de levage (10, 11) du premier dispositif.
